# EUROPEAN PATENT APPLICATION

(11) **EP 1 686 373 A1**
(43) Date of publication of application: **02.08.2006**
(21) Application number: 06075161.7
(22) Date of filing: 24.01.2006
(51) Int. Cl.: G01N 27/62

(54) **Ion sensors formed with coatings**

(30) Priority: 26.01.2005 US 43848
(71) Applicant: WOODWARD GOVERNOR COMPANY, Fort Collins, Colorado 80525 (US)
(72) Inventor: Kelly, Benson, Colorado 80526 (US); VanDyne, Edward, Colorado 80538 (US); Riley, Patrick, South Carolina 29615 (US)
(74) Representative: Smith, Peter James

(57) **Abstract**

The invention provides an ion sensor for use in a fuel nozzle of a gas turbine combustor and other combustor surfaces that uses thin-film coatings to form both the dielectric (124) and electrode layer (120,122) of the ion sensor and methods to provide an electrical connection (126) to the electrode layer (120,122). The dielectric layer (124) electrically insulates the sensor from the combustor surface, which is typically grounded. The electrode layer (120,122), typically a metallic material capable of withstanding high temperatures in the combustion environment without delamination from the dielectric layer (124), is applied over the dielectric layer (124) and forms the ion-sensing electrode. A wire (126) may protrude through the dielectric layer (124) to connect to the electrode layer (120,122) and provide for the ion-sensing electrode to be controlled outside of the combustion zone (e.g., by a control module for signal processing).

## Description

### FIELD OF THE INVENTION

This invention pertains to ion sensing, and more particularly to ion sensors for continuous combustion systems.

### BACKGROUND OF THE INVENTION

Continuous combustion systems such as gas turbine engines are used in a variety of industries. These industries include transportation, electric power generation, aircraft engines and afterburner applications, and process industries. During operation, the continuous combustion system produces energy by combusting fuels such as propane, natural gas, diesel, kerosene, or jet fuel. One of the byproducts of the combustion process is emission of pollutants into the atmosphere. The levels of pollutant emissions are regulated by government agencies. Despite significant reductions in the quantity of environmentally harmful gases emitted into the atmosphere, emission levels of gases such as NOₓ, CO, CO₂ and hydrocarbon (HC) are regulated by the govemment to increasingly lower levels and in an ever increasing number of industries.

Industry developed various methods to reduce emission levels. For example, one method for gaseous fueled industrial turbines is lean premix combustion. In lean premix combustion, the ratio between fuel and air is kept low (lean) and the fuel is premixed with air before the combustion process. The temperature is then kept low enough to limit the formation of nitrous oxides (which occurs primarily at temperatures above 1850 K). The premixing also decreases the possibility of localized fuel rich areas where carbon monoxides and unburnt hydrocarbons are not fully oxidized.

Unfortunately, many of these systems have experienced problems associated with instabilities and flashback. Combustion instability can occur when the air/fuel ratio is too lean and the flame becomes unstable and creates pressure fluctuations, resulting in unsteady heat release of the burning fuel that can produce destructive pressure oscillations or acoustic oscillations. Flashback occurs when the flame normally contained to the combustion zone of the gas turbine combustion system moves back into the fuel nozzle. When flashback occurs in the fuel nozzle, the temperatures inside the nozzle rise above the design temperature for the nozzle material causing costly damage, which can include fragments of the nozzle material, usually metal, tending to pass through the turbine system usually causing severe damage to the turbine blades. This type of failure, regardless of frequency, can be catastrophic in terms of down time, maintenance costs and lost revenue.

Another challenge facing both industrial and aircraft turbines in the detection of the flame is a phenomenon known as lean blow-off Turbine control systems, and in particular industrial turbines, need to monitor all turbines for the presence of flames, including during ignition. Aircraft turbines encountering long descents will sometimes emit characteristics indicating the onset of lean blow-off where the fuel to air ratio is so lean that the flame cannot be sustained. Combustion sensing technologies are needed to detect these conditions.

United States patent number 6,429,020 teaches an ion sensing apparatus that can survive the extreme temperatures of a flashback condition and provide the necessary response condition. United States patent application number 10/411,167 and the corresponding European patent application published as EP 1618363 A teach that an ion sensing apparatus such as that taught in the 6,429,020 patent can also be used to sense combustion instability.

The ion-sensing apparatus such as that taught in the 6,429,020 patent and the like are manufactured using machined electrodes, non-ferrous dielectric insulators, and mechanical fasteners for retention to the support structure (e.g., a gas turbine fuel nozzle). This construction technique limits the application of ion sensing due to the hardware complexity and space constraints required for the ion-sensing apparatus. Additionally, the mechanical fasteners carry the risk of losing preload over repeated thermal cycles, thereby allowing sensor components to fail and potentially causing downstream damage due to debris entering turbine blades or other exhaust system components.

### BRIEF SUMMARY OF THE INVENTION

The invention provides an ion sensor that uses thin-film coatings to form both the dielectric layer as well as the sensing electrode layer of the ion-sensing apparatus. The coating system can be applied to a fuel nozzle of a gas turbine combustor, premixer tube surrounding the nozzle, or other combustor surface.

The ion sensor consists of at least two coating layers. The first coating layer is a dielectric that electrically insulates the sensor from the nozzle body, which is grounded.
The second coating layer, which is applied over the dielectric layer, forms the ion-sensing electrode.

The second coating layer will typically be a metallic material capable of withstanding high temperatures in the combustion environment without delamination from the dielectric layer and must also resist surface oxidation when exposed to the combustion flame.

In one embodiment, a shielded wire is secured to the nozzle body with the wire protruding through the dielectric layer to connect to the electrode layer. The wire connection allows a signal wire or conductor to be connected to the ion-sensing electrode layer for communication outside of the combustion zone (e.g., to a control module for signal processing).

In an alternate embodiment, the coating system layers (i.e., the dielectric coating layer and the electrode layer) are extended up the nozzle center body such that the mechanical connection to the wire is made further from the flame, thereby reducing thermal stress on the mechanical connection.

These and other aspects and advantages of the invention, as well as additional inventive features, will become more apparent from the following detailed description when taken in conjunction with the accompanying drawings.

### BRIEF DESCRIPTION OF THE DRAWINGS

FIG. 1 is a diagram illustrating the components of the present invention in a portion of a turbine system;

FIG. 2 is a diagram illustrating an embodiment of the ion sensor of the present invention integrated on a nozzle shield;

FIG. 3a is a cross-sectional view along circle 3-3 of FIG 1 of the electrode component of one embodiment of the present invention integrated into a fuel nozzle body;

FIG. 3b is a cross-sectional view along circle 3-3 of FIG. 1 of an alternate embodiment of the ion sensor of the present invention integrated into a fuel nozzle body; and

FIG. 4 is a diagram illustrating an embodiment of the invention where the layers of the ion sensor coatings are extended up a fuel nozzle body to thereby reduce thermal stress on mechanical connections.

While the invention will be described in connection with certain preferred embodiments, there is no intent to limit it to those embodiments. On the contrary, the intent is to cover all alternatives, modifications and equivalents as included within the scope of the invention as defined by the appended claims.

### DETAILED DESCRIPTION OF THE INVENTION

The present invention provides an apparatus to sense ion current in a combustion region of a continuous combustion system such as a gas turbine, industrial bumer, industrial boiler, or afterburner utilizing ionization signals. The invention may be used with any hydrocarbon fuels, such as liquid or gaseous fuels, that produce free ions in the flame when the fuel is burned. The magnitude of the free ions in the flame is proportional to the concentration of hydrocarbons, and therefore the measured ion current is also proportional to the magnitude of free ions. The invention eliminates many of the mechanical components comprising the sensing elements of prior designs where the mechanical components are retained to the mounting structure by mechanical fasteners and over repeated thermal stress cycles and mechanical vibration, the mechanical components can become loose, thereby exposing the turbine or engine to downstream damage from flying debris. The dielectric coating layer of the present invention can be much thinner than the mechanical dielectric washers of prior sensors, resulting in much improved heat transfer from the nozzle tip to the cooler nozzle structure. The resulting lower surface temperatures should reduce the tendency of the flame to attach itself to the nozzle, which could lead to catastrophic failure. Additionally, the coating system of the present invention is typically less expensive to manufacture than a mechanical assembly. For the purpose of describing the invention, a gas turbine fuel nozzle application will be described.

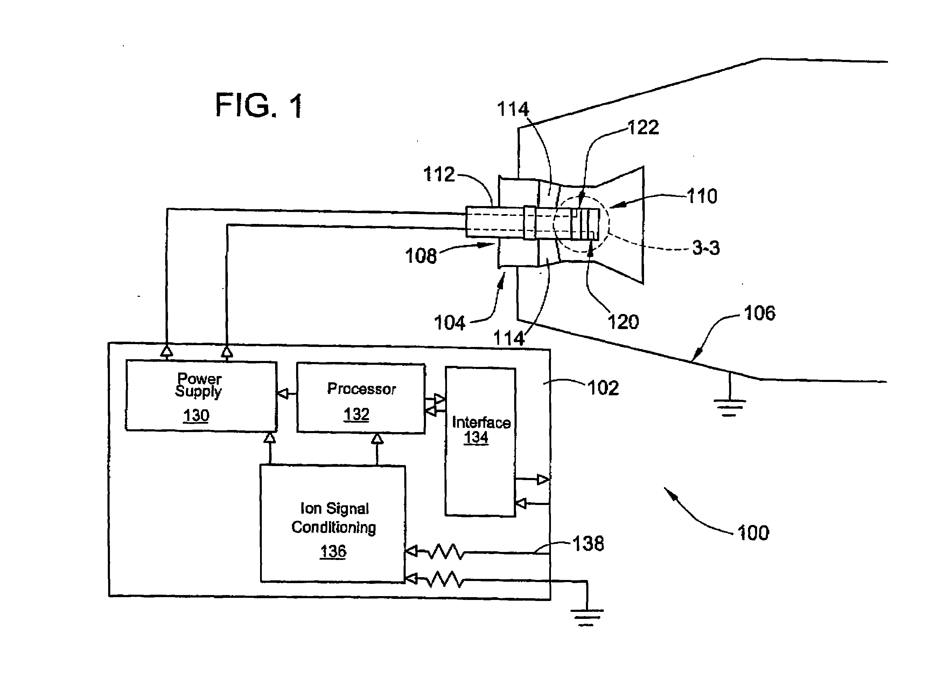

Turning to the drawings, wherein like reference numerals refer to like elements, the invention is illustrated as being implemented in a suitable combustion environment. Figure 1 illustrates an example of a suitable combustion environment 100 on which the invention may be implemented. The combustion environment 100 is only one example of a suitable combustion environment and is not intended to suggest any limitation as to the scope of use or functionality of the invention. For example, the invention may be implemented in an afterburner, industrial burner, industrial boiler, and the like. Neither should the combustion environment 100 be interpreted as having any dependency or requirement relating to any one or combination of components illustrated in the exemplary operating environment 100.

With reference to Figure 1, an exemplary system for implementing the invention includes electronic module 102, fuel nozzle 104, and combustion chamber 106. The fuel nozzle 104 is mounted to the combustion chamber 106 using conventional means. The fuel nozzle 104 is typically made of conducting material and has an inlet section 108, an outlet port 110 that leads into combustion chamber 106 and a center body 112. An igniter is used to ignite the fuel mixture in the combustion region after the air and fuel are mixed in a premix swirler 114. A nozzle shield surrounds the center body 112. In afterburners, the air typically enters combustion chamber 106 through separate passages and a fuel nozzle passage is used to introduce fuel in the combustion chamber 106. The operation of the turbine is well known and need not be discussed herein.

The electronic module 102 may be a separate module, part of an ignition control module or part of an engine control module. The electronic module 102 includes a power supply 130 for providing a controlled ac or dc voltage signal to the electrodes 120, 122 when commanded by processor 132. Processor 132 commands the power supply to provide power to the electrodes 120, 122, receives ion current signals from electrodes 120, 122 via conditioning module 136, performs computational tasks required to analyze the ion signals to determine combustion instability and the onset of combustion instability, and communicates with other modules such as an engine control module through interface 134. Conditioning module 136 receives signals from the electrodes 120, 122 via lines 138 and performs any required filtering or amplification.

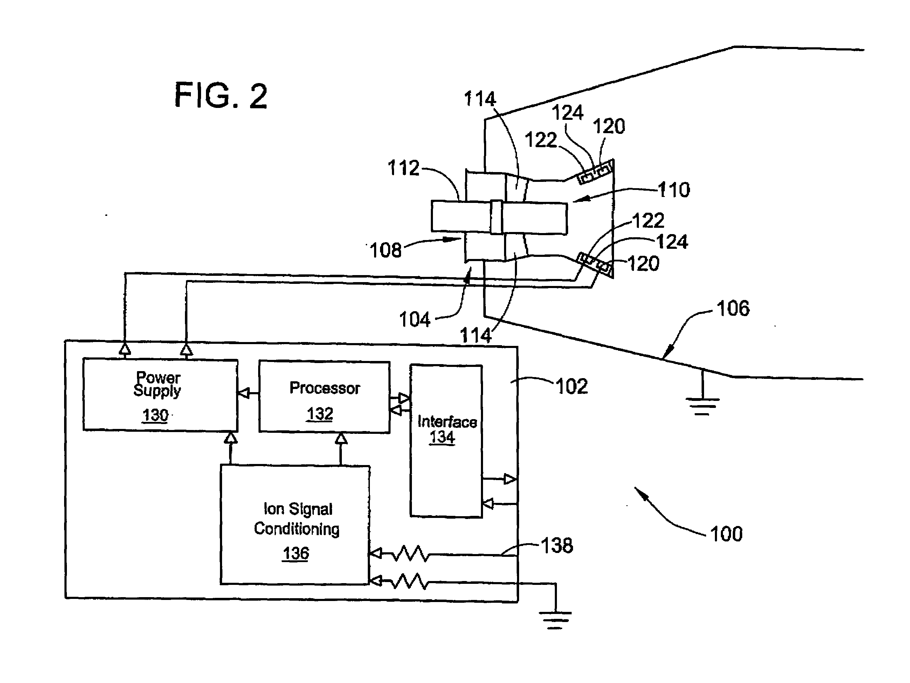

The present invention uses thin-film coatings to form both the dielectric layer as well as the sensing electrode layer. In the description that follows, a grounded nozzle body shall be used to describe the invention. It is noted that other structures may be used. For example, the coating system can be applied to a premixer tube surrounding the nozzle, the nozzle shield (see FIG. 2), or other combustor surface. For aircraft turbines, there are similar structures to which the coatings may be applied to form the ion sensor. In the drawings, the dielectric and conductive coatings are shown as blocks. It is noted that the coatings can be any size or thickness. The first coating layer is the dielectric, which electrically insulates the sensor from the grounded nozzle body. The material specification and application procedure must be controlled such that differences in coefficient of thermal expansion between the coating and the nozzle body do not cause delamination of the coating during extreme temperature cycles. Additionally, the dielectric material must maintain high resistivity at the elevated temperatures that are typical in combustion chambers. The dielectric coating layer can be much thinner than the mechanical dielectric washers of prior sensors, resulting in a much better heat transfer from the nozzle tip to the cooler nozzle structure. The lower surface temperatures should reduce the tendency of the flame to attach itself to the nozzle, which could lead to catastrophic failure.

The second coating layer (applied over top of the dielectric) is the ion-sensing electrode which will be a metallic material capable of withstanding high temperatures in a combustion environment without delamination from the dielectric layer. The metallic material must also resist surface oxidation when exposed to the combustion flame.

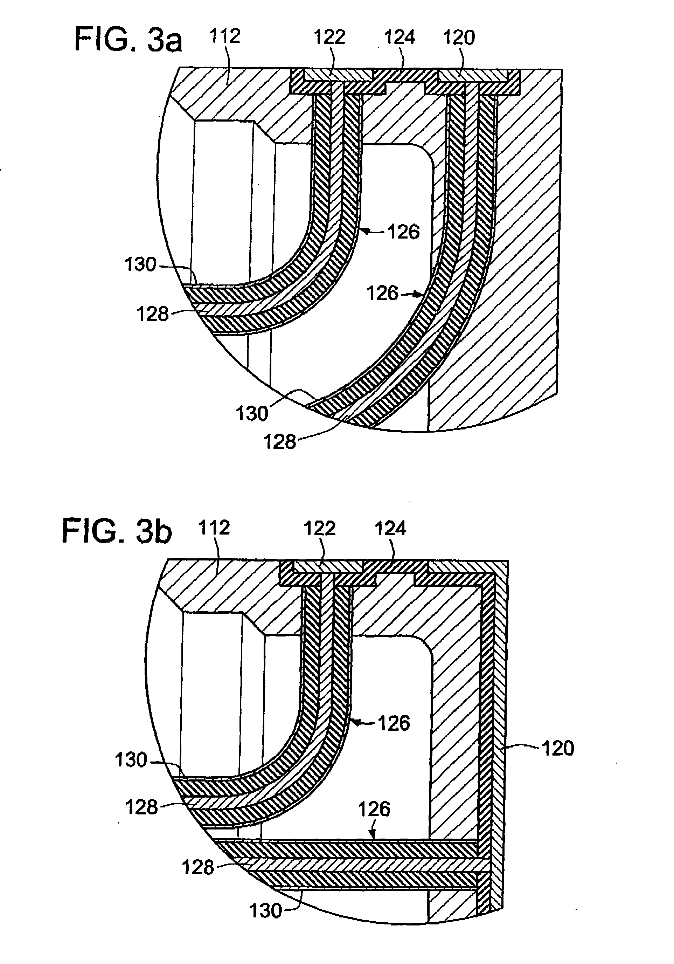

Turning now to Fig. 3a, an example of an embodiment of the ion sensor formed with thin-film coatings is shown applied to the gas turbine fuel nozzle 104 of Fig. 1. The dielectric layer 124 is applied to the nozzle body 112. The dielectric material in one embodiment is alumina. Other materials may be used that have the required properties to operate in the combustion environment. The thickness of the coating is application specific. The metallic layer is applied over the dielectric layer 124 to form electrodes 120, 122. Note that only a single electrode may be needed for some applications. Depending on the coating thickness and the requirements for surface smoothness, the nozzle surface metal may need to be contoured as shown in FIG. 3a such that the finished electrode surface is smooth to reduce or eliminate air flow disturbances.

FIG. 3a also illustrates a method of connecting a wire from inside the nozzle body to the ion-sensing electrode. In this embodiment a metal-shielded thermocouple wire assembly 126 is secured to the nozzle body while the conducting wire 128 protrudes through the dielectric layer 124 and is secured to the electrodes 120, 122. Care must be taken to avoid touching the conductive coating 120,122 with the shield 130 of the thermocouple wire assembly 126. The wire assembly 126 is routed outside the combustion zone to electronic module 102. The conducting wire 128 does not contact any grounded surface. During operation, the electrodes 120, 122 are electrically charged via conducting wires 128. Note that other types of wire may also be used. For example, high temperature coaxial cables may be used.

Figure 3b shows an alternate embodiment of the electrodes 120, 122 where the surface area of electrode 120 is maximized by using the entire tip of the center body 112. In this embodiment, the dielectric coating (e.g., alumina) is first applied over the entire area of the nozzle tip. Secondly, two thin film ion-sensing elements are precisely coated over the top of the dielectric layer 124 to form the electrodes 120, 122.

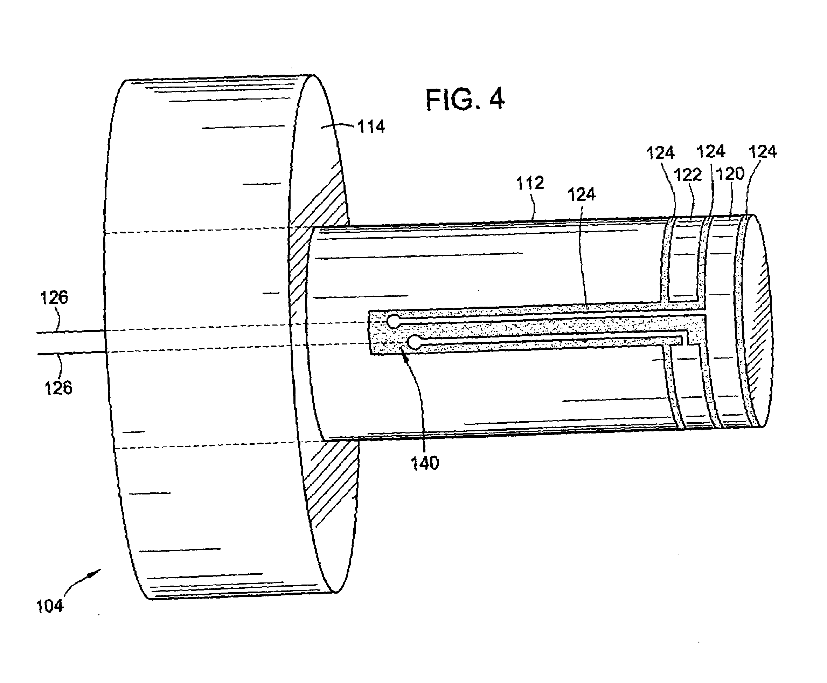

Turning now to FIG. 4, an embodiment is illustrated in which both the dielectric layer and the metallic electrode layer of the coating system are extended up the nozzle center body 112 to create an interface 140 such that the mechanical connection to the wire can be accomplished further from the flame, thereby reducing thermal stress on the mechanical connection.

It can therefore be seen that an ion sensing apparatus using thin-film coatings and methods to connect to the ion sensing apparatus has been described. The invention eliminates mechanical components (e.g., sensing elements and dielectric insulators) of prior sensors that can become loose over repeated thermal stress and mechanical vibrations, thereby exposing the turbine or engine to downstream damage from flying debris. The use of coatings results in reduced manufacturing costs compared to a mechanical component system.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. For example, the ion-sensing coating system can be applied to the dome area of a cylinder head, fuel injector tip, or other available surface of a reciprocating gas or diesel engine. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. An ion sensor for detecting ion current in a continuous combustion system having a combustion region, the ion sensor mounted on a surface in the continuous combustion system, the surface exposed to gases in the combustion region, the ion sensor **characterized by** comprising:
a dielectric coating layer (124) formed from a thin-film coating and attached to the surface;
at least one electrode formed on the dielectric coating layer (124) from a conductive coating; and
means (126) for allowing the at least one electrode (120,122) to communicate with at least one component (102) outside of the combustion region.

2. The ion sensor of claim 1 wherein the conductive coating comprises a conductive thin-film coating.

3. The ion sensor of claim 1 wherein the at least one electrode (120,122) comprises a first electrode (120) and a second electrode (122), the first electrode (120) and the second electrode (122) being held in a coplanar but spaced apart manner by the dielectric coating layer.

4. The ion sensor of claim 3 wherein the surface is a fuel nozzle surface (104) and the first electrode (120) and second electrode (122) are formed such that the first electrode (120) and second electrode (122) do not create air flow disturbances on the fuel nozzle surface (104).

5. The ion sensor of claim 4 wherein the first electrode (120) surface area is maximized by using the entire tip of the fuel nozzle surface (104).

6. The ion sensor of any preceding claim wherein the means (126) for allowing the at least one electrode (120,122) to communicate with at least one component outside of the combustion region comprises a metal shielded thermocouple wire (128).

7. The ion sensor of claim 6 wherein the metal shield (130) of the metal shielded thermocouple wire (128) is attached to a grounded surface.

8. The ion sensor of claim 1 wherein the surface is a fuel nozzle surface (104) and the dielectric coating layer (124) extends away from a tip of the fuel nozzle surface (104), the ion sensor further comprising a strip formed on the dielectric coating layer (124) extending away from the tip of the fuel nozzle surface (104), the strip comprising conductive coating and connected to the at least one electrode (120,122).

9. The ion sensor of claim 8 wherein the at least one electrode (120,122) comprises a first electrode (120) and a second electrode (122), the first electrode (120) and the second electrode (122) being held in a coplanar but spaced apart manner by the dielectric coating layer, and the strip comprises a strip for each of the first electrode (120) and the second electrode (122), the first electrode (120) and the second electrode (122) being each connected to a different strip.

10. The ion sensor of claim 8 further comprising an interface (140) at an end of the strip opposite the at least one electrode (120,122).

11. The ion sensor of claim 10 wherein the means for allowing the at least one electrode (120,122) to communicate with at least one component outside of the combustion region comprises a wire connected to the strip at the interface (140).

12. The ion sensor of any preceding claim wherein the conductive coating is a metallic material that is capable of withstanding the temperatures in the combustion region without delaminating from the dielectric coating layer (124).

13. The ion sensor of any preceding claim wherein the dielectric coating layer (124) electrically insulates the at least one electrode (120,122) from the surface, the dielectric coating layer (124) having a coefficient of thermal expansion such that a difference between the coefficient of thermal expansion of the dielectric coating layer (124) and the coefficient of thermal expansion of the surface does not cause delamination of the dielectric coating layer (124) during temperature cycles of the combustion region.

14. A method of creating an ion sensor on a surface in a continuous combustion system having a combustion region, the surface exposed to gases in the combustion region, the method **characterized by** comprising:
forming a dielectric coating layer (124) on the surface, the dielectric layer formed from a thin-film coating material;
forming at least one electrode (120,122) on the dielectric coating layer (124) using a conductive coating; and
forming a connection (126) to the at least one electrode (120,122) to communicate with at least one component (102) outside of the combustion region.
